# EUROPÄISCHE PATENTSCHRIFT

(11) **EP 3 025 200 B1**
(45) Veröffentlichungstag und Bekanntmachung des Hinweises auf die Patenterteilung: **19.08.2020**
(21) Anmeldenummer: 14736784.1
(22) Anmeldetag: 07.07.2014
(51) Int. Cl.: G03H 1/22, G03H 1/26, G07D 7/00, G07D 7/12, G03H 1/00, G06K 9/22, G07D 7/121, H04W 4/50, G06K 9/00

(54) **VERFAHREN UND GERÄT ZUR VERIFIKATION VON DIFFRAKTIVEN ELEMENTEN**
METHOD AND DEVICE FOR VERIFYING DIFFRACTIVE ELEMENTS
PROCÉDÉ ET DISPOSITIF PERMETTANT DE VÉRIFIER DES ÉLÉMENTS DIFFRACTIFS

(30) Priorität: 25.07.2013 CH 13082013
(43) Veröffentlichungstag der Anmeldung: 01.06.2016
(73) Patentinhaber: U-NICA Systems AG, 7302 Landquart (CH)
(72) Erfinder: REINHARDT, Jonas, 7206 Igis (CH)
(74) Vertreter: Detken, Andreas
(86) Internationale Anmeldenummer: PCT/EP2014/064447
(87) Internationale Veröffentlichungsnummer: WO 2015/010881

(56) Entgegenhaltungen:
- EP-A1- 2 290 620
- EP-A1- 2 607 953
- WO-A1-92/09444
- US-A1- 2009 154 813
- US-A1- 2011 292 277
- US-A1- 2013 044 257
- QINGXUAN YANG ET AL: "Inertial sensors aided image alignment and stitching for panorama on mobile phones", PROCEEDINGS OF THE 1ST INTERNATIONAL WORKSHOP ON MOBILE LOCATION-BASED SERVICE, MLBS '11, 1. Januar 2011 (2011-01-01), Seite 21, XP055134004, New York, New York, USA DOI: 10.1145/2025876.2025882 ISBN: 978-1-45-030928-8

## Beschreibung

### TECHNISCHES GEBIET

Die vorliegende Erfindung betrifft ein Verfahren und eine Vorrichtung zur Authentifizierung von Gegenständen und Dokumenten anhand von diffraktiven Elementen wie Hologrammen oder holografischen Kinegrammen.

### STAND DER TECHNIK

Die Kennzeichnung von Gegenständen mit Hologrammen oder hologrammähnlichen Elementen ist weit verbreitet. Hologramme und hologrammähnliche Elemente zeichnen sich dadurch aus, dass sie diffraktive Strukturen enthalten, die bei Beleuchtung mit sichtbarem Licht zu wahrnehmbarer optischer Beugung und Interferenz im transmittierten oder reflektierten Licht führen, ähnlich wie bei einem Beugungsgitter. Ein Hologramm ist eine mit holografischen Techniken hergestellte zweidimensionale Abbildung eines Gegenstands, die bei Beleuchtung mit geeignetem Licht durch Interferenz ein dreidimensionales Abbild des Ursprungsgegenstands erzeugt. Mathematisch gesehen wird in einem Hologramm der Gegenstand aus seiner Fouriertransformierten rekonstruiert. Als hologrammähnliche Elemente werden im Folgenden Elemente mit diffraktiven Strukturen bezeichnet, die bei Beleuchtung mit sichtbarem Licht visuell wahrnehmbare Beugungs- und Interferenzphänomene erzeugen, die aber dabei nicht notwendig ein dreidimensionales Abbild eines Ursprungsgegenstands erzeugen. Ein hologrammähnliches Element kann z.B. ein Stereogramm oder eine Computer-generierte Grafik mit das Licht beugenden Primitiven wie etwa ein Kinegram™ (wie es z.B. von OVD Kinegram AG entwickelt wurde) sein, das bei Beobachtung aus unterschiedlichen Raumrichtungen unterschiedliche Bilder zeigt, wobei die unterschiedlichen Bilder z.B. den Anschein eines Bewegungsablaufs vermitteln können. Im Folgenden wird der Begriff "diffraktives Element" als Oberbegriff für Hologramme und hologrammähnliche Elemente mit diffraktiven Strukturen verwendet.

Visuelle Kennzeichnungen mit diffraktiven Elementen haben einen hohen Wiedererkennungswert und erfolgen zum Beispiel aus Gründen der Ästhetik, als Herkunftsnachweis, zur Verbesserung der Fälschungssicherheit, zur Angabe eines Verfalldatums, aber auch aus anderen Gründen. Häufig sind solche diffraktiven Elemente auf Etiketten aufgebracht. Es sind aber auch Druckapplikationen oder Spritzgussverfahren bekannt geworden, mit denen diffraktive Elemente direkt auf Gegenständen erzeugt werden können. Gemeinhin werden die diffraktiven Elemente in den genannten Anwendungen mit dem unbewaffneten Auge beurteilt. Im diffraktiven Element eingebrachte Texte und Symbole, z.B. ein Hinweis wie "genuine" oder ein Firmenlogo, können dabei als Hilfsinformationen dienen, um beispielsweise die Echtheit eines Produktes zu bestätigen.

Es liegt dabei auf der Hand, dass diese Art der Verifikation nur qualitativer und subjektiver Natur ist und vom ungeübten Auge und ohne Vergleichsmöglichkeit mit einem Originalmuster sogar kontraproduktiv sein kann, da in diesen Fällen selbst eine minderwertige Kopie eines diffraktiven Elements die Originalität oder Echtheit des Gegenstandes oder des Dokumentes leicht vortäuschen kann. Beispielsweise kann ein diffraktives Element so aufgebaut sein, dass ein Markenname nur aus einem bestimmten Bildwinkel lesbar ist. Für einen menschlichen Betrachter ist das Echtheitskriterium dann schon erfüllt, wenn er bei einer Hin-und-her-Bewegen des Hologramms zwischenzeitlich den Markennamen erscheinen oder wieder verschwinden sieht. Das genügt aber nicht für eine zuverlässige Authentifizierung. Zudem lassen sich in das diffraktive Element integrierte maschinenlesbare Daten mit dem Auge alleine meistens nicht erkennen und noch weniger lesen oder sonst irgendwie auswerten.

Es ist daher eine objektive und quantitativ verwertbare Methode erwünscht, um diffraktive Element wie Hologramme erkennen und auslesen zu können. Da es in der Praxis nur wenig Sinn ergibt, die diffraktiven Elemente in einem Labor auszuwerten, sondern vielmehr eine Authentifizierung im Feld von Jedermann, d. h. wenig geschulten Anwendern durchgeführt können werden muss, sollte eine effiziente apparategestützte Auswertung mehr oder weniger automatisch ablaufen, vorzugsweise intuitiv zu bedienen und auf mobilen, vorzugsweise auch kostengünstigen und leicht erhältlichen Geräten implementierbar sein.

Aus dem Stand der Technik sind bereits Verfahren zur maschinellen Auswertung von Hologrammen bekannt. Beispielsweise offenbart die EP-A-0880112 ein Verfahren, bei dem mithilfe eines Rekonstruktionsstrahls, eines Beugungsstrahls nullter Ordnung aus dem Hologramm sowie zwei zugeordneten Referenzstrahlen das Hologramm auf dem fraglichen Gegenstand verifiziert wird. Das vorgeschlagene Verfahren ist relativ kompliziert und erfordert eine spezifisch für diesen Zweck konstruierte Nachweisvorrichtung. Auch die Bedienung durch ungeschultes Personal ist schwer vorstellbar. Weitere Verfahren, um ein Hologramm auszulesen, wurden z. B. in US-A-2012/176655, US-A-2007/121186 oder US-B2-6832003 angegeben. Auch diese Verfahren erfordern komplizierte Nachweisvorrichtungen, die spezifisch für die Auswertung von Hologrammen konstruiert sind und nicht breit verfügbar sind.

Ein anderer Ansatz zur Authentifizierung eines Hologramms wurde von InkSure Technologies, Inc. unter der Bezeichnung Smartsure™ vorgeschlagen. Hier wird ein Mobiltelefon für die Erfassung eines Abbilds eines Hologramms verwendet. Das Verfahren setzt voraus, dass das zu verifizierende Hologramm sogenannte "Taggants" enthält. Dabei handelt es sich um am Hologramm angebrachte, spezielle Pigmente. Die Authentifizierung erfolgt also nicht primär über die holografischen (diffraktiven) Eigenschaften des Hologramms, sondern über spezielle Merkmale, die zusätzlich mit dem Hologramm assoziiert wurden.

In der WO-A-2011/045543 wird ein Verfahren beschrieben, bei dem das Erscheinungsbild eines Hologramms simuliert und auf einem Display eines mobilen Geräts dargestellt wird. Je nach Orientierung des Gerätes wird eine andere Ansicht des Hologramms dargestellt. Der Benutzer vergleicht das simulierte Bild mit dem Bild des entsprechenden echten Hologramms bei gleichem Beobachtungswinkel. Der Vergleich geschieht aber nur durch visuell über das Auge des Benutzers und ist daher von der subjektiven Wahrnehmung des Benutzers abhängig. Zudem sind so nur Merkmale erkennbar und unterscheidbar, die mit dem blossen, unbewaffneten Auge wahrnehmbar sind.

Die US 2009/154813 A1 offenbart ein Verfahren zur optischen Validierung eines Hologramms. Dabei wird das Hologramm aus zwei unterschiedlichen Richtungen beleuchtet, und es werden zwei Bilder des Hologramms erstellt. Aus diesen unterschiedlichen Bildern wird eine Bilddifferenz berechnet, welche mit einem festgelegten Grenzwert verglichen wird und so eine Echtheitsprüfung des Hologramms erlaubt.

In der EP 2 290 620 A1 ist ein Verfahren zur Echtheitsprüfung von Artikeln offenbart, bei dem ein sich auf dem Artikel befindender, optisch variabler Sicherheitscode, z.B. ein Hologramm, und eine spezifische Seriennummer von einem optischen Sensor eingelesen und an eine Datenbank übermittelt werden. Eine Echtheit des Artikels besteht bei Übereinstimmung der erfassten Kombination von. Seriennummer und Sicherheitscode mit in der Datenbank entsprechend vorgemerkter Kombination.

### DARSTELLUNG DER ERFINDUNG

Die Erfindung stellt ein Verfahren zur Authentifizierung eines diffraktiven Elements zur Verfügung, welches halbautomatisch oder vollautomatisch ausgeführt werden kann und keinen subjektiven Vergleich erfordert. Das Verfahren kann auch von ungeschulten Benutzern ausgeführt werden. Es eignet sich auch zur Authentifizierung von diffraktiven Elementen, die Merkmale aufweisen, die mit dem blossen Auge nicht oder nur schwer erkennbar sind, z.B. Mikrostrukturen wie Mikroschriften, oder die nur sehr schwer voneinander unterscheidbar sind, z.B. pseudozufällige Muster ("Fingerprints"). Das Verfahren erfasst die diffraktiven Eigenschaften des diffraktiven Elements und ist nicht auf weitere Kennzeichnungsmittel angewiesen. Das Verfahren wird mit einem portablen Gerät ausgeführt, welches eine Bildaufnahmevorrichtung aufweist. Derartige Geräte sind breit verfügbar, z.B. in Form eines Mobiltelefons, so dass keine speziellen, kostspieligen und schwer verfügbaren Geräte oder spezielle, komplexe Aufbauten für die Authentifizierung benötigt werden.

Das Verfahren umfasst die Merkmale des Anspruchs 1.

Es werden also mindestens zwei, vorzugsweise drei oder mehr Bilder des diffraktiven Elements aus unterschiedlichen Richtungen aufgenommen. Dies kann in Form von einzeln ausgelösten Fotografien mit einer herkömmlichen Kamerafunktion erfolgen, oder es kann eine Videosequenz mit einer Vielzahl von aufeinanderfolgenden Bildern aufgenommen werden, während das portable Gerät und das diffraktive Element relativ zueinander verschwenkt werden. Die Aufnahmedaten können im einfachsten Fall Datenstrukturen sein, in denen die Bilddaten und Orientierungsdaten in geeigneter Form zusammengefasst sind. Die Referenzdaten können in diesem Fall aus vorhandenen Daten für ein bekanntes diffraktives Element (Referenzelement) berechnet werden, indem Bilder des Referenzelements bei den gegebenen räumlichen Orientierungen berechnet (simuliert) werden. Der Bildvergleich kann dann mit bekannten digitalen Bildverarbeitungsalgorithmen erfolgen. Es ist aber auch denkbar, Aufnahmedaten abzuleiten, die auf komplexere Weise aus den Bilddaten und Orientierungsdaten abgeleitet sind, z.B. unter Einsatz von verlustfreien oder verlustbehafteten Kompressionsalgorithmen, von Mustererkennungsalgorithmen und/oder unter Einsatz von Hashfunktionen usw. Auf diese Weise wird es möglich, die Datenmenge vor dem Vergleich deutlich zu reduzieren und den elektronischen Vergleich zu vereinfachen.

Es können auch zwei oder mehr Bilder bei unterschiedlichen Beleuchtungsbedingungen aufgenommen werden, z.B. einmal im natürlichen Umgebungslicht und einmal mit einer Beleuchtungsfunktion des portablen Geräts. Die Beleuchtungsfunktion kann z.B. durch eine im portablen Gerät integrierte Lichtquelle wie z.B. einen integrierten elektronischen Blitz oder eine integrierte LED realisiert sein oder durch eine externe, mit dem portablen Gerät verbundene Lichtquelle. Auch ist es denkbar, Bilder bei unterschiedlichen Beleuchtungsstärken der Beleuchtungsfunktion des portablen Geräts aufzunehmen. Dabei ist es von Vorteil, wenn mindestens zwei Bilder mit unterschiedlichen Beleuchtungsbedingungen aus im Wesentlichen derselben Richtung aufgenommen werden, um direkt den Einfluss der unterschiedlichen Beleuchtungsbedingungen ermitteln zu können. Beispielsweise ist es denkbar, ein erstes Bild ohne Blitz und unmittelbar daran anschliessend in zweites Bild mit Blitz auszulösen oder umgekehrt. In einer weiteren Variante weist das portable Gerät ein separates Beleuchtungsmodul auf, das eine gezielte spezielle Beleuchtung erzeugt, z.B. mit gerichtetem Licht, wie es von einer Laserdiode erzeugt wird. Auch können Bilder bei unterschiedlichem Abstand zwischen dem diffraktiven Element und dem portablen Gerät aufgenommen werden.

Um auch kleine Einzelheiten des diffraktiven Elements auflösen zu können, kann die Bildaufnahmevorrichtung ein Makroobjektiv und/oder ein optisches Zoomobjektiv aufweisen. Es ist auch denkbar, ein separates Vergrösserungsmodul vorzusehen, das als Aufsatz für die Bildaufnahmevorrichtung ausgebildet ist und eine Linsenanordnung aufweist, die den Abbildungsmassstab erhöht (z.B. durch eine Vergrösserung der Brennweite des Objektivs). Dies ist insbesondere dann von Vorteil, wenn in dem Verfahren ein diffraktives Element authentifiziert werden soll, das Strukturen aufweist, die mit dem blossen Auge nicht erkennbar sind, wie Mikroschriften oder Zufallsmuster. Ein Vergrösserungsmodul und ein Beleuchtungsmodul können zu einer Einheit zusammengefasst sein. Diese kann als Aufsatz oder dergleichen ausgebildet sein, der mit dem portablen Gerät lösbar verbindbar ist. Das Ermitteln der räumlichen Orientierungen erfolgt vorzugsweise mit Hilfe von im portablen Gerät integrierten Sensoren. Dabei handelt es sich z.B. um einen oder mehrere Inertialsensoren (lineare Beschleunigungssensoren), ein oder mehrere Gyroskope (Drehbeschleunigungssensoren) und/oder ein oder mehrere Magnetometer. Im Folgenden werden solche Sensoren vereinfachend pauschal als Orientierungssensoren bezeichnet. Die Sensoren ermitteln in der Regel mindestens eine räumliche Orientierung relativ zu einem festen Bezugssystem, z.B. relativ zur Schwerkraftrichtung (z-Richtung) mittels Inertialsensoren und gegebenenfalls relativ zum magnetischen Norden mittels eines Magnetometers. Änderungen der Orientierung können zusätzlich durch Gyrosensoren (elektronische Gyroskope) erfasst werden. Um daraus eine räumliche Orientierung des portablen Geräts relativ zum diffraktiven Element zu ermitteln, können verschiedene Verfahren eingesetzt werden. So kann z.B. anfänglich eine Referenzmessung in einer vorgeschriebenen, bekannten Referenzorientierung relativ zum diffraktiven Element durchgeführt werden, und nachfolgende Orientierungen werden, wie beansprucht, auf diese Referenzorientierung bezogen.

Alternativ oder zusätzlich kann die Orientierung des portablen Geräts relativ zum diffraktiven Element direkt aus den aufgenommenen Bildern ermittelt werden. Dies ist z.B. dann möglich, wenn das diffraktive Element eine geeignete und vorab bekannte Umrissform hat und/oder mit geeigneten Markierungen versehen ist. So kann das diffraktive Element beispielsweise im Umriss rechteckig sein und in einer Ecke eine Markierung aufweisen, die anzeigt, wo "oben links" ist, oder es kann z.B. eine asymmetrische Umrissform aufweisen, die es direkt ermöglicht, eindeutig die Orientierung des diffraktiven Elements festzustellen. Auf diese Weise ist es möglich, aus einem Bild des diffraktiven Elements die Orientierung der Bildaufnahmevorrichtung um eine Normale senkrecht zur Oberfläche des diffraktiven Elements zu bestimmen (den Azimut ϕ in einem polaren Koordinatensystem, in dem die Oberflächennormale die z-Achse bildet). Aus dem Ansichtsverhältnis (aspect ratio) des Bildes des diffraktiven Elements aufgrund der Projektion in die Bildebene kann zudem der polare Winkel (die Elevation ϑ) relativ zur Normalen ermittelt werden. Aus der Grösse und Lage des Bildes im Bildfeld der Bildaufnahmevorrichtung und aus der Bildverzerrung kann bei bekannten Abbildungseigenschaften wie Brennweite und Sensorgrösse zudem in bekannter Weise auf den Abstand und die laterale Lage der Bildaufnahmevorrichtung relativ zum diffraktiven Element geschlossen werden.

Ähnliches gilt, wenn das diffraktive Element mit mehreren geeigneten Markierungen versehen ist, die z.B. in bekannten Abständen und Winkelrelationen zueinander über eine Fläche verteilt im Bereich des diffraktiven Elements angeordnet sind. In diesem Fall kommt es auf Form und Grösse des diffraktiven Elements nicht an.

Wenn die Orientierung des portablen Geräts relativ zum diffraktiven Element direkt aus den aufgenommenen Bildern ermittelt wird, können Orientierungssensoren im portablen Gerät entfallen. Da aber viele portable Geräte, insbesondere die meisten heutigen Smartphones, ohnehin ab Werk mit solchen Sensoren ausgestattet sind, ist es von Vorteil, die entsprechenden Informationen im erfindungsgemässen Verfahren ebenfalls zu nutzen. Dadurch kann z.B. die Genauigkeit der Ermittlung der Orientierung verbessert werden, und/oder es kann Redundanz geschaffen werden, indem die Orientierung unabhängig auf zwei verschiedene Weisen bestimmt wird.

Das diffraktive Element kann z.B. in Form einer Etikette, eines Aufklebers, als Aufdruck und dergleichen auf Dokumenten oder anderen Gegenständen aufgebracht oder als Gravur, Prägung, Spritzgussabformung oder durch lithografische Verfahren oder Erosionsverfahren in Gegenstände eingebracht worden sein. Solchermaßen gestaltete Oberflächen zeigen bei Betrachtung mit dem blossen Auge unter Beleuchtung mit Weisslicht meist ein regenbogenähnliches Bild, das sich im einfachsten Fall unter verschiedenen Betrachtungs- und Bestrahlungswinkeln farblich ändert. Komplexere Formen zeigen bestrahlungswinkelabhängige Bewegungen von Mustern, Symbolen Zeichen etc. bis hin zu scheinbar dreidimensionalen Bildobjekten und Projektionen, die nur unter gerichtetem, kohärentem Licht vollständig sichtbar sind. Das diffraktive Element kann also so ausgewählt sein, dass es bei Betrachtung aus unterschiedlichen Orientierungen unter Beleuchtung mit Weisslicht mindestens einen der folgenden Effekte erzeugt:
eine Farbverschiebung;
eine Veränderung oder scheinbare Bewegung von Bildern, Symbolen oder Zeichen (dies schliesst auch Bewegungsparallaxeneffekte ein, d.h. die Veränderung eines Bildes, die üblicherweise beim Betrachten eines dreidimensionalen Objekts aus unterschiedlichen Raumrichtungen auftritt); und
ein Auftauchen und Verschwinden von Bildern (einschliesslich geometrische Figuren, Piktogramme oder Mikrostrukturen wie Mikroschriften), Symbolen oder Zeichen.

Das Verfahren kann eine gezielte Benutzerführung umfassen. So kann das Verfahren insbesondere das Ausgeben von Anweisungen an den Benutzer über eine visuelle oder akustische Schnittstelle (z.B. Display und/oder Lautsprecher) umfassen. Beispielhaft könnten die Anweisungen sinngemäss lauten: "1. Halte das Gerät horizontal im Abstand von 20-30 cm über das diffraktive Element; 2. Löse die Kamera aus, um ein erstes Bild aufzunehmen; 3. Schwenke das Gerät um mindestens 20° um eine erste Achse; 4. Löse die Kamera aus, um ein zweites Bild aufzunehmen; 5. Schwenke das Gerät um mindestens 20° um eine zweite Achse; 6. Löse die Kamera aus, um ein drittes Bild aufzunehmen; 7. Warte... Auswertung läuft ...; 8. Ergebnis: Das diffraktive Element stammt von XYZ. Die Echtheit wird bestätigt." Selbstverständlich sind auch völlig anderslautende Anweisungen denkbar. Die Anweisungen hängen vorzugsweise von den ermittelten räumlichen Orientierungen und weiteren Messbedingungen ab, um den Benutzer gezielter zu führen (z.B. "Langsamer schwenken", "Jetzt um andere Achse schwenken", "Stärker beleuchten" usw.).

Der Vergleich der Bilder und der assoziierten räumlichen Orientierungen mit Referenzdaten kann ganz oder teilweise im portablen Gerät erfolgen. Dazu können die Referenzdaten im portablen Gerät speicherbar sein. Die Referenzdaten können statisch im portablen Gerät gespeichert sein, z.B. in einer lokalen Datenbank, die bei der Installation des betreffenden Programms im portablen Gerät angelegt wird, oder sie können dynamisch während der Durchführung des Verfahrens oder bei einem Synchronisationsvorgang von einem entfernten Server mit entsprechender Datenbank abgerufen werden, z.B. über eine drahtlose Datenverbindung und/oder ein Netzwerk. So ist es z.B. denkbar, dass das portable Gerät über eine WLAN- oder 2G/3G/4G-Mobilfunkverbindung oder über eine kurzreichweitige Verbindung wie eine Infrarotstrecke, eine Bluetooth-Verbindung, eine NFC-Verbindung usw. mit dem Internet verbunden ist, und dass der entfernte Server ebenfalls mit dem Internet verbunden ist, so dass das portable Gerät die Daten via drahtlose Verbindung und Internet von einem beliebigen Ort abrufen kann.

Es ist aber auch denkbar, dass der Vergleich der Aufnahmedaten mit Referenzdaten ganz oder teilweise in einer separaten Auswerteeinheit erfolgt, die räumlich vom portablen Gerät entfernt angeordnet ist. Dazu werden die Aufnahmedaten an die Auswerteeinheit übermittelt. Dies kann über eine drahtlose Datenverbindung und/oder ein Netzwerk erfolgen, wie dies oben schon ausgeführt wurde. Die übermittelten Aufnahmedaten können selbstverständlich in der Auswerteeinheit vor dem Vergleich weiter bearbeitet werden.

Um die Auswertung zu erleichtern, kann das portable Gerät eine für das portable Gerät spezifische Gerätesignatur an die Auswerteeinheit senden. Dadurch wird es möglich, gerätespezifische Eigenheiten wie die Eigenschaften der verbauten Optik und des verbauten Aufnahmechips bei der Auswertung zu berücksichtigen. Um spätere Nachprüfungen bzw. eine Qualitätskontrolle zu erleichtern, kann die Gerätesignatur zusammen mit den Aufnahmedaten in einer elektronischen Datenbank abgelegt werden. Die Aufnahmedaten können auch mit weiteren Daten verknüpft werden, wie Datum, Uhrzeit, Nutzerprofildaten usw.

Unabhängig vom Ort, an dem der Vergleich der Aufnahmedaten mit den Referenzdaten stattfindet, ist es von Vorteil, wenn das Authentifizierungsergebnis an eine Auswerteeinheit bzw. einen Server und/oder an eine elektronische Datenbank übertragen wird. Auf diese Weise kann eine Statistik über fehlgeschlagene Authentifizierungsversuche geführt werden, so dass Fälschungen des diffraktiven Elements besser erkannt und nachverfolgt werden können. Dabei kann das Authentifizierungsergebnis zusammen mit den Aufnahmedaten und gegebenenfalls mit weiteren Daten wie der Gerätesignatur in der elektronischen Datenbank abgelegt werden. Auf diese Weise wird es möglich, offline eine genauere Analyse der Aufnahmedaten durchzuführen und/oder die Bildvergleichsalgorithmen später an realen Daten zu trainieren und festzustellen, ob sich bei einem geänderten Bildvergleichsalgorithmus eine verbesserte Erkennungsgenauigkeit ergibt. Zu diesem Zweck oder auch zu anderen Zwecken können die Aufnahmedaten, die Referenzdaten, das Authentifizierungsergebnis und weitere Daten wie die Gerätesignatur mindestens teilweise auch an weitere Auswerteeinheiten übertragen werden.

Vorzugsweise weist die Bildaufnahmevorrichtung eine elektrisch ansteuerbare Fokussiereinrichtung auf (z.B. wie bei einer an sich bekannten Autofokusvorrichtung), und die Bildaufnahmevorrichtung wird so betrieben, dass sie Bilder in verschiedenen Fokusebenen relativ zum diffraktiven Element aufnimmt. Auf diese Weise kann die Ebene grösster Bildschärfe auch noch nachträglich ermittelt werden, oder es können Bilder in mehreren Fokusebenen für den Vergleich mit den Referenzdaten verwendet werden.

Die Fokussiereinrichtung kann zusätzlich Daten für eine Abschätzung der Qualität der Authentifizierung bereitstellen. Beispielsweise besteht eine Fokusbestimmung aufgrund einer Kantenkontrastmessung in der Messung der Steilheit zwischen Hell/Dunkel-Konturkanten, wobei ein geringer Wert einer Steilheit für auf eine mindere Schärfe hinweist und damit für eine mindere Qualität der Bildaufnahme steht. Eine Fokusbestimmung auf der Basis einer Phasenvergleichsmessung liefert über den Abstand gleicher Lichtintensitätsmuster ebenfalls Qualitätsparameter für die Bildschärfe und damit die Qualität der Bildaufnahme.

Des weiteren ist eine integrierte Zoom-Funktion im Gerät von Vorteil, wobei ein digitales Zoom durch ein optisches Zoom ergänzt werden kann. Ein Zoom mit relativ langer Brennweite erweist sich z.B. bei der Erkennung von Mikrostrukturen wie Mikroschriften als nützlich. Die Funktion des optischen Zooms wird von hochwertigen Smartphones heute bereits zur Verfügung gestellt. Auch gibt es bereits hochwertige Digitalkameras, die unter Betriebssystemen wie Android™ betrieben werden und eine kamerainterne Auswertung bzw. eine drahtlose Datenkommunikation ähnlich wie ein Smartphone erlauben. Eine Kamera mit optischem Zoom kann aber auch als ein Erweiterungsmodul an das portable Gerät angeschlossen sein, oder das portable Gerät kann mit einer separaten Aufsteckoptik ausgerüstet sein, um die nötige Brennweite zu erreichen oder auf andere Weise den Abbildungsmassstab zu vergrössern.

Das portable Gerät kann ein Geolokalisierungsmodul zur Ermittlung einer Ortsinformation aufweisen, z.B. ein GPS-Modul. In diesem Fall kann das Authentifizierungsergebnis mit einer Ortsinformation assoziiert (verknüpft) werden. Mit solchen Daten kann z.B. die regionale Häufigkeitsverteilung von Fälschungen abgeschätzt werden.

Das portable Gerät kann integrierte Sensoren aufweisen, aus deren Messwerten ein Qualitätsmass für die Authentifizierung ermittelt wird. Hierzu können u.a. die schon erwähnten Inertialsensoren (lineare Beschleunigungssensoren) und Gyroskope (Drehbeschleunigungssensoren) dienen, wobei das Qualitätsmass dann aus den Beschleunigungsdaten dieser Sensoren ermittelt wird. Dies kann z.B. dazu dienen, um unerwünschte ruckartige Bewegungen zu erkennen. Das portable Gerät kann optional die Messung abbrechen, wenn das Qualitätsmass ausserhalb eines vorgegebenen Wertebereichs liegen, und/oder den Benutzer auf die mangelnde Messqualität in geeigneter Form hinweisen, z.B. eine Fehlermeldung ausgeben.
Die Erfindung stellt ausserdem ein portables Gerät zur Authentifizierung eines diffraktiven Elements zur Verfügung. Dieses weist die Merkmale des Anspruchs 13 auf.

Um die Beleuchtung zu erleichtern, kann das portable Gerät eine Lichtquelle wie z.B. eine oder mehrere LEDs, eine UV-LED (z.B. zur Erkennung einer Lumineszenz), oder einen Laser, z.B. in Form einer Laserdiode (z.B. zur Erkennung eines CLR-Effektes (CLR = Covert Laser Readable)) aufweisen. Solche Leuchtmittel können fest verbaut sein oder können als separate Beleuchtungsmodule, z.B. als Steckmodul, das portable Gerät ergänzen. Das diffraktive Element wird während der Aufnahme der Bilder bevorzugt mit einer solchen Lichtquelle beleuchtet. Da die Lichtquelle ortsfest am portablen Gerät angeordnet ist, verändert sich von Aufnahme zu Aufnahme nicht nur die räumliche Orientierung zwischen der Bildaufnahmevorrichtung und dem diffraktiven Element, sondern auch die Orientierung zwischen der Lichtquelle und dem diffraktiven Element. Dies und die Kenntnis der Beleuchtungsrichtung kann die Auswertung erleichtern. Wie schon oben ausgeführt wurde, kann das portable Gerät ausserdem mit einem separaten Vergrösserungsmodul mit einer Linsenanordnung aus mindestens einer Linse versehen sein, um den Abbildungsmassstab der Bildaufnahmeeinrichtung zu vergrössern. Beleuchtung und Vergrösserung können auch durch ein Zusatzmodul in Form eines kombinierten Beleuchtungs- und Vergrösserungsmoduls realisiert sein.
Die Erfindung bezieht sich demgemäss auch auf ein Set aus einem portablen Gerät der vorgenannten Art und einem separaten Zusatzmodul, wobei das Zusatzmodul mit dem portablen Gerät verbindbar ist und mindestens eines der folgenden Elemente aufweist:
- eine Linsenanordnung aus mindestens einer Linse zur Erhöhung des Abbildungsmassstabs der Bildaufnahmevorrichtung; und/oder
- eine Lichtquelle zur Beleuchtung des diffraktiven Elements, wobei es sich bei der Lichtquelle insbesondere um einen Laser handeln kann.

Wie schon oben ausgeführt wurde, kann das portable Gerät dazu ausgebildet sein, mit einem räumlich entfernten Gerät (Server, Auswerteeinheit) zu kommunizieren. Dazu kann das portable Gerät mindestens ein Kommunikationsmodul zum Datenaustausch über ein Netzwerk aufweisen. Es kann sich dabei um ein drahtloses Kommunikationsmodul handeln, z.B. ein Mobilfunkmodul nach einem bekannten Mobilfunkstandard wie GSM/GPRS/EDGE (2G), UMTS (3G) oder LTE (4G), ein WLAN/Wi-Fi-Modul, ein Bluetooth-Modul, ein Nahfeldkommunikationsmodul (NFC-Modul) usw.

Das portable Gerät kann z.B. eines der folgenden Geräte sein: ein Mobiltelefon (insbesondere ein sogenanntes Smartphone), ein tragbarer Computer wie ein Tablet-Computer oder ein Notebook-Computer, ein PDA ("Personal Digital Assistant"), ein elektronisches Lesegerät wie ein E-Book-Reader, ein Scanner, eine digitale Fotokamera, eine digitale Videokamera, ein digitaler Musikplayer, ein digitales tragbares Videoabspielgerät, eine tragbare Spielkonsole, eine Armbanduhr, ein Computerperipheriegerät.

Die Erfindung stellt ausserdem ein Computerprogramm zur Verfügung, welches bei der Ausführung in einem portablen Gerät, das eine Bildaufnahmevorrichtung aufweist, ein Verfahren der vorstehend dargestellten Art ausführt. Es wird also ein Computerprogrammelement zur Verfügung gestellt, das einen Computerprogrammcode enthält, der bei Ausführung in einer Steuereinrichtung eines portablen Geräts das Verfahren ausführt. Das Computerprogramm bzw. Computerprogrammelement kann in jeder geeigneten Form bereitgestellt werden, einschliesslich Source Code, Objektcode oder Maschinencode. Es kann auf einem computerlesbaren Medium gespeichert sein oder als Datenstrom über ein Netzwerk bereitgestellt werden. Beim Computerprogramm kann es sich um eine sogenannte "App" handeln, die unter einem bestehenden Betriebssystem über definierte APIs mit der Hardware des portablen Geräts kommuniziert.

Sämtliche Überlegungen zum Verfahren der vorliegenden Erfindung gelten auch in gleicher Weise für das portable Gerät und das Computerprogramm der vorliegenden Erfindung.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine Skizze zur Illustration des erfindungsgemässen Verfahrens bei Drehung um eine erste Achse;
- Fig. 2: eine Skizze zur Illustration des erfindungsgemässen Verfahrens bei Drehung um eine zweite Achse;
- Fig. 3: eine Skizze zur Illustration des erfindungsgemässen Verfahrens bei Drehung um sowohl die erste als auch die zweite Achse;
- Fig. 4: eine schematische Skizze ausgewählter Komponenten eines Mobiltelefons, die in einem erfindungsgemässen Verfahren eingesetzt werden;
- Fig. 5: ein Flussdiagramm für eine Ausführungsform der Erfindung; und
- Fig. 6: ein Smartphone mit einem externen Vergrösserungs- und Beleuchtungsmodul; und
- Fig. 7: eine Skizze zur Illustration einer möglichen Variante der Benutzerführung.

### WEGE ZUR AUSFÜHRUNG DER ERFINDUNG

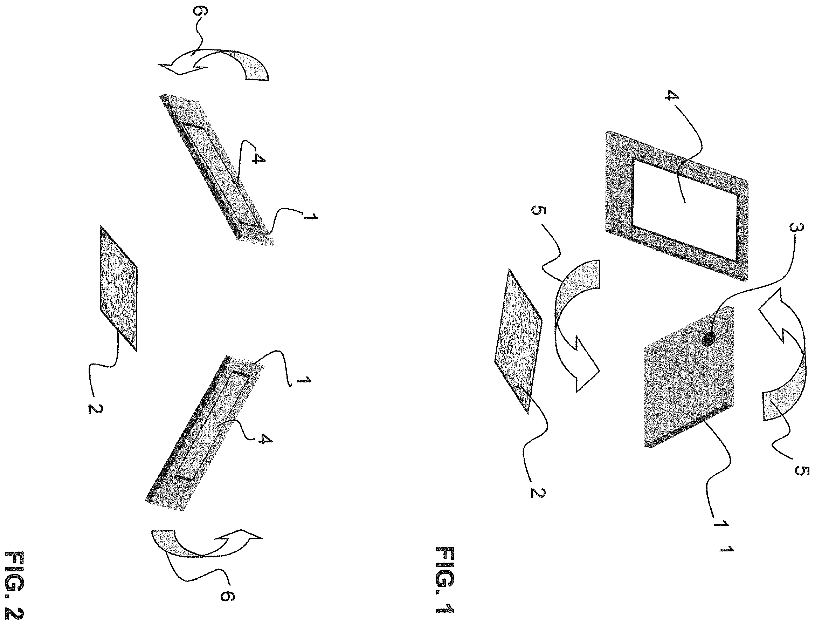

In den Figuren 1-3 ist ein portables Gerät 1 in Form eines Smartphones mit einer Bildaufnahmevorrichtung in Form einer Kamera 3 und einem Display 4 dargestellt. Das portable Gerät 1 wird eingesetzt, um ein optisch-diffraktiven Element auf einem Dokument 2 zu authentifizieren. Dazu wird das portable Gerät 1 um eine erste bzw. zweite räumliche Achse relativ zu dem diffraktiven Element verschwenkt (Pfeile 5, 6). Dabei werden Bilder des diffraktiven Elements aus verschiedenen Raumrichtungen aufgenommen. Aus den Bildern und den zugehörigen Orientierungen des portablen Geräts 1 werden Aufnahmedaten abgeleitet, die elektronisch mit Referenzdaten verglichen werden, um das diffraktive Element zu authentifizieren.

Grundsätzlich ist eine Authentifizierung anhand von solchen Aufnahmedaten schon dann denkbar, wenn mindestens ein Bild und ein erster dazu korrelierter Wert für die Orientierung zwischen Gerät 1 und Dokument 2 vorliegen. Dieser einfachste, nicht beanspruchte Fall einer Verifikation kann beispielsweise die Prüfung eines holografischen Markenlogos von Seiten eines Konsumenten sein, um das Vertrauen in die Originalität eines Artikels zu stärken, den er gerade zu kaufen beabsichtigt. In diesem Beispiel erhält der Konsument das für den Nachweis notwendige App zum Beispiel von der Website des Markeninhabers zur Verfügung gestellt.

Für eine zuverlässigere Authentifizierung, z.B. für Zollbehörden, reicht die Minimalvariante jedoch meist nicht aus. Daher ist es von Vorteil, mindestens eine zweite Bildaufnahme bei einer anderen Orientierung durchzuführen, um aussagekräftigere Aufnahmedaten zu erhalten. Prinzipiell können beliebig viele Teilinformationen in einer diffraktiven Struktur wie einem Hologramm enthalten sein, wobei unterschiedliche Teilinformationen aus unterschiedlichen Raumrichtungen beobachtbar sind. Zum Beispiel kann ein in einem Hologramm oder Kinegramm dargestelltes Objekt sich mit fortschreitender Änderung des Bildaufnahmewinkels zu bewegen scheinen oder immer wieder neue Ansichten aufweisen. Mit jeder Bildaufnahme wird im Fall einer solchen Mehr-Bild-Verifikation ein weiteres Wertepaar aus Bildinformation und räumlicher Orientierung erzeugt, was die Zuverlässigkeit der erfindungsgemäßen Authentifizierung statistisch massiv erhöht.

Des weiteren beinhaltet das beschriebene Verfahren die Möglichkeit, die Komplexität und damit die Höhe der Fälschungssicherheit zu erhöhen, indem die Bildinformation nicht nur mit der räumlichen Orientierung, sondern auch mit weiteren räumlichen Parametern verknüpft wird. Ein Beispiel für einen weiteren räumlichen Parameter ist die eingestellte Fokusebene der Bildaufnahmevorrichtung. Da ein Hologramm eine scheinbare räumliche Tiefe bildet, kann sich mit unterschiedlichen Fokusebenen jeweils eine andere Bildinformation offenbaren. In diesem Beispiel erzeugt das portable Gerät mit jeder Bildaufnahme quasi ein Wertetriplet bestehend aus Bildinformation, Orientierung und Fokusebene. Eine weitere Erhöhung der Komplexität der Authentifizierung durch Hinzufügen weiterer Werte zur Bildinformation ist prinzipiell denkbar.

Die Bilderfassung kann mit einer Videofunktion des portablen Geräts 1 erfolgen, die bei heutigen Smartphones meist ohnehin verfügbar ist.

Die Aufnahmedaten können jegliche Informationen einschliessen, die aus den Bildaufnahmen stammen. Insbesondere können die Aufnahmedaten die Originalbilddateien mit einschliessen. Die Originalbilddateien beinhalten jedoch den Nachteil, dass die Dateigrösse und dementsprechend der Speicherbedarf hoch sind. Des weiteren ist wegen der grossen Datenmenge der rechnerische Aufwand für die Authentifizierung hoch, was Kompromisse bei der Rechnerleistung - auf dem portablen Gerät oder einem entfernten Server - und der Verifikationsgeschwindigkeit nötig macht. Die Aufnahmedaten umfassen daher vorzugsweise aus der Bildaufnahme extrahierte Daten, zum Beispiel Vektordaten von extrahierten alphanumerischen Zeichen, Logos, Ornamenten etc. Die Datenextraktion wird dabei mit üblichen Bildbearbeitungs- und Bilderkennungsalgorithmen nach dem Stand der Technik durchgeführt. Die extrahierten Daten können aber auch Hashwerte sein, die aus Eigenschaften wie z.B. den zufälligen Mikrostrukturfehlern der diffraktiven Struktur abgeleitet werden.

Das portable Gerät kann während des Authentifizierungsvorgangs online mit einem Server verbunden sein oder - was in der Praxis vorteilhafter ist - die Authentifizierung offline durchführen. Die Datensätze der überprüften diffraktiven Strukturen werden in diesem Fall bei der nächsten Verbindung mit dem Server auf diesen hochgeladen, um die Authentifizierungen abzuschließen. In einer weiteren Variante sind die Referenzdaten bereits im Speicher des Mobiltelefons abgelegt, so dass in dieser Variante die Authentifizierung unmittelbar ohne Serverkontakt abgeschlossen werden kann.

Die Verifikationsergebnisse können mit der Identität des Verifizierenden oder anderen Profildaten und dem Ort der Verifikation erweitert werden, da die Geräte sich in der Regel selbst mit einer UUID (universally unique identifier) ausweisen und in der Regel über einen GPS-Empfanger verfügen. Weitere Vorteile bestehen in der obligatorischen Protokollierung der Verifikationszeit über die Uhr des Geräts und der Nutzung der integrierten Beschleunigungssensoren, der Gyroskope, der Autofokusmessung und der Belichtungsmessung für einen Qualitätswert für den jeweiligen Verifikationsvorgang.

Die Bilderfassung sollte möglichst mit ruhiger Hand durchgeführt werden, wobei geeignete Lichtbedingungen und eine ausreichende Objektfokussierung gegeben sein müssen. Eine Verifikation mit zittrigen Handbewegungen verursacht in der Regel ein unzuverlässigeres Ergebnis als eine solche, die mit einer ruhigen Handbewegung durchgeführt wird. Desgleichen erzeugt eine bei Dunkelheit oder mit mangelhafter Scharfeinstellung durchgeführte Verifikation ein unzuverlässigeres oder gar unbrauchbares Ergebnis im Gegensatz zu einer solchen, die optimal belichtete und scharfe Bildaufnahmen als Grundlage hat. Es ist daher von Vorteil, solche Parameter während der Aufnahme zu erfassen und in eine Qualitätsbewertung einfliessen zu lassen. Das portable Gerät kann aus solchen Parametern ein oder mehrere Qualitätsindikatoren berechnen und ein Warnsignal abgeben und/oder die Messung abbrechen, wenn einer oder mehrere Qualitätsindikatoren ausserhalb eines vorgegebenen Wertebereichs liegen.

Das Verfahren wird im portablen Gerät vorteilhaft durch eine Software durchgeführt, die den Anwender durch die Prozedur führt, die Auswertung durchführt und Datensätze für den Upload auf einen Server vorbereitet. Aktualisierte Versionen der Software werden während der nächsten Kontaktaufnahme mit dem Server heruntergeladen, sofern solche vorliegen. Die Gerätesoftware sollte demnach über ein Protokoll verfügen, das eine Verbindung mit einem entfernten Server erlaubt.

In einer vereinfachten Version des Verfahrens kann aber auf eine Kommunikation mit einem Server auch verzichtet werden.

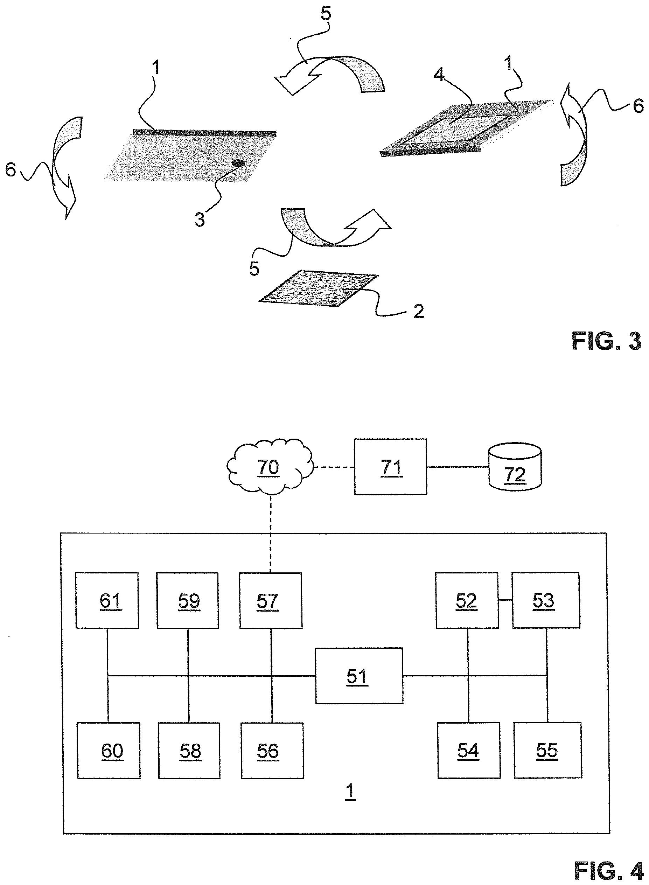

Die Fig. 4 illustriert in sehr schematischer Weise einige relevante Komponenten eines Systems zur Durchführung des Verfahrens. Ein portables Gerät 1 weist unter anderem einen Prozessor 51 auf, der das Verfahren steuert. Mit dem Prozessor 51 wirken unter anderem zusammen: eine Bildaufnahmeeinrichtung (Kamera) 52, die über eine Autofokuseinrichtung 53 verfügt; eine Beleuchtungseinrichtung 54 (z.B. ein LED-Blitz); ein Touchscreen-Display 55; ein Speicher 56; ein Kommunikationsmodul 57 (z.B. Mobilfunkmodul, Bluetoothmodul, NFC-Modul usw.); eine Inertialsensoreinheit 58 mit Inertialsensoren für drei orthogonale Raumrichtungen; eine Gyroskopeinheit 59 mit Drehwinkelbeschleunigungsensoren (Gyroskopen) bezüglich Drehungen um drei orthogonale Raumrichtungen; ein Geolokalisierungsmodul 60 (z.B. ein GPS-Modul); ein Lautsprecher 61. Das portable Gerät kann weitere Ein-/Ausgabegeräte wie z.B. eine Tastatur und weitere Sensoren, die in gleicher Weise mit dem Prozessor 51 zusammenwirken, z.B. Sensoren für Umgebungslicht, Temperatur, Luftfeuchtigkeit usw., enthalten. Über ein Netzwerk 70 kommuniziert eine entfernte Auswerteeinheit 71 (Server) drahtlos mit dem Kommunikationsmodul 57. Eine Datenbank 72 ist mit der Auswerteeinheit 72 verbunden.

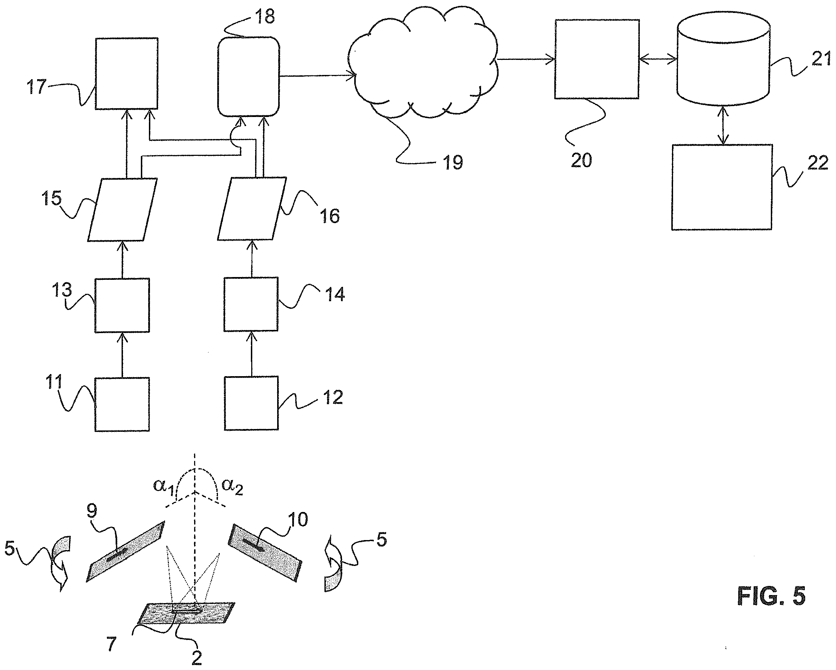

Anhand der Fig. 5 werden nun einige Betriebsmodi des zur Authentifizierung verwendeten portablen Geräts erläutert. Der Ablauf kann grundsätzlich wie folgt stattfinden: Ein diffraktives Element 7 auf einem Dokument 2 wird aus mindestens zwei Orientierungen, die hier pauschal und vereinfachend mit Winkelbezeichnungen α₁, α₂ angegeben sind, mit einem portablen Gerät aufgenommen (Ausführung der ersten Bildaufnahme 11; Ausführung der zweiten Bildaufnahme 12). Die Bilder des diffraktiven Elements werden optional auf einem Display des portablen Geräts als Bilder 9 und 10 dargestellt. Die erste bzw. zweite Bildaufnahme wird in Schritten 13 bzw. 14 zu einer ersten bzw. zweiten Bildinformation reduziert. Diese Datenreduktion ist zur effizienten Datenverarbeitung und Datenspeicherung von Vorteil. In einem einfachen Fall werden erkennbare Buchstaben und Zahlen als Vektordateien, zum Beispiel im Format .cgm, .dxf, .odg, oder .svg, mit üblichen Bildbearbeitungsroutinen aus dem Abbild des diffraktiven Elements erzeugt. Aus den ) Bildinformationen wird zusammen mit den Orientierungsdaten in Schritten 15 bzw. 16 ein erster bzw. zweiter Aufnahmedatensatz erzeugt. Die Datensätze werden im portablen Gerät mit Referenzdaten verglichen (Schritt 17) und oder an ein Netzwerk gesendet (Schritt 18), woraufhin sie vom Netzwerk an einen externen Server übermittelt werden (Schritt 19). Der externe Server empfängt die Datensätze in Schritt 20, vergleicht diese in Schritt 21 mit Daten aus einer Datenbank und verwertet die Datensätze anschliessend, z.B. zur Qualitätskontrolle, zur statistischen Erfassung usw.

Beim Vergleich mit Referenzdaten können in den Bildern enthaltene Bildelemente geprüft werden, wie das Vorhandensein bestimmter Formen, Linien, Schriftzeichen, Zahlen, Codes usw. Diese Bildelemente können ins diffraktive Element eingebettet (in Form von diffraktiven Strukturen, so dass sie ihr Erscheinungsbild z.B. in Abhängigkeit von der Beobachtungsrichtung ändern) und/oder dem diffraktiven Element überlagert sein, z.B. als Aufdruck neben dem diffraktiven Element. Dabei können auch Erkennungsverfahren zum Einsatz kommen, wie sie in WO 2012/032367 A1 beschrieben sind. In solchen Verfahren werden verschobene Kantenbereiche in entsprechend vorbereiteten Markierungen erkannt.

Folgende Betriebsmodi sollen besonders diskutiert werden:
(a) Authentifizierung ohne jegliche Server-Anbindung: In diesem voll-autonomen Modus werden für die Authentifizierung eines diffraktiven Elements 7 auf einer Oberfläche eines Gegenstandes oder Dokumentes 2 mindestens zwei Bilder mit Orientierungen α₁, α₂ des portablen Geräts relativ zum Dokument 2 aufgenommen. Der Anwender wird dabei von der Software durch den Arbeitsablauf geführt, wobei die Software gewissermaßen als Bedienungshilfe dient. Die erste Anweisung der Software kann beispielsweise die Vorgabe eines bestimmten Aufnahmewinkels für die Ausführung einer ersten Bildaufnahme 11 und einer zweiten Bildaufnahme 12 sein. Das Abspeichern der Bild- und Orientierungsinformationen sowie fakultativ der Informationen zu Winkeländerungsgeschwindigkeit, linearer Beschleunigung und GPS-Koordinaten und deren Auswertung erfolgt im autonomen Modus bevorzugt automatisch. In diesem Modus kann fakultativ ein Protokoll aller erfassten Daten inklusive der ID des Anwenders sowie über das Ergebnis der Authentifizierung bestehend aus Ja/Nein-Information sowie einem Qualitätswert abgespeichert und gegebenenfalls automatisch oder auf Anfrage des Anwenders angezeigt werden. Dieser Betriebsmodus hat seinen Wert vor allem auf Konsumentenebene. Die betriebsnotwendige Software wird für diesen Anwendungsfall als App, z. B. auf der Website eines Herstellers oder Markeninhabers, bereitgestellt.
(b) Authentifizierung mit gelegentlicher Serveranbindung: Im Wesentlichen beinhaltet der Workflow die gleichen Elemente wie beim ausschließlich autonomen Betriebsmodus. Zusätzlich werden während einer aufgebauten Verbindung zum Server 20 Daten synchronisiert, wobei eine oder mehrere der folgenden Aktionen durchgeführt werden: (i) Ein aktualisiertes Authentifizierungsprogramm wird vom Server 20 heruntergeladen, sofern eine neue Version des Programms vorliegt, (ii) Das Authentifizierungsergebnis wird mit allen anderen Daten des Protokolls auf den Server 20 hochgeladen, (iii) Die hochgeladenen Daten werden auf der zentralen Datenbank 21 gespeichert und über den Server 20 in einer gewünschten Form, z. B. als Bericht für den Markeneigentümer, aufbereitet. Der Wert der aufbereiteten Daten kann neben reinen Sicherheitsaspekten auch Marketingzwecken dienen und ist damit für Nutzer wie beispielsweise für den Hersteller des mit dem betreffenden Echtheitsmerkmal versehenen Produkts als sehr hoch einzustufen, (iv) Die aufbereiteten Daten werden dem die Authentifizierung vor Ort durchführenden Anwender durch Download zur Verfügung gestellt. Diese Option (iv) kann aber aus Vertraulichkeitsgründen auch unterbunden werden.
   Der Betriebsmodus mit der gelegentlichen Serveranbindung hat in der Praxis die höchste Bedeutung, da in diesem Modus einerseits die für die professionelle Authentifizierung notwendige zentrale Speicherung und Auswertung von Daten zur Verfügung steht, aber andererseits eine störanfällige und teure Verbindung nicht permanent während der Authentifizierung aufgebaut werden muss.
(c) Authentifizierung mit stehender Serveranbindung: In diesem vollständig nicht-autonomen Betriebsmodus deckt das lokal auf dem Smartphone befindliche Anwendungsprogramm nur die Funktionen ab, die die Datenaufnahme bestehend aus Bilddaten und mindestens den zugehörigen Orientierungswerten und den Upload der Daten auf den Server ermöglichen. Die Protokollierung der Datenaufnahme und die Auswertung der Daten erfolgt auf dem entfernten Server. Der Anwender wird in diesem Modus bevorzugt nur über den Abschluss und das Ergebnis der Authentifizierung informiert. Die Information für den Anwender kann in diesem Betriebsmodus beispielsweise lauten: "Authentifizierung erfolgreich, Merkmal echt". Der vollständig nicht-autonome Betriebsmodus bietet gegenüber dem teil-autonomen Modus mit gelegentlicher Serveranbindung nur den Vorteil, dass keine sensitiven Protokolldaten auf dem Smartphone abgespeichert werden.

Für diese Arten des Echtheitsnachweises gibt es aus verschiedenen Gründen ein hohes Bedürfnis. Einerseits hat nicht nur der Käufer oder Mieter des Produktes oder der Inhaber des Dokumentes die relativ schnell erworbene Sicherheit über ein echtes Dokument oder Produkt zu verfügen, sondern auch industrielle Verarbeiter eines wertvollen Vorproduktes, etwa ein Einbauteil für eine Maschine oder zum Beispiel auch der Handel, der die schützenswerten Produkte vertreibt, Dienstleistende, die solche Produkte nutzen, oder auch staatliche Stellen, die Produkte prüfen müssen, etwa Zolldienststellen, oder Dokumente prüfen müssen, etwa Grenzschutzstellen.

An den Verifikationsergebnissen ist nicht nur eine Vielzahl von Personengruppen interessiert. Die damit verbundenen Daten erlauben auch eine weitere statistische Erfassung in Schritt 22, zum Beispiel für Marketingzwecke oder um ein Bezahlsystem für die Verifikationsvorgänge zu etablieren.

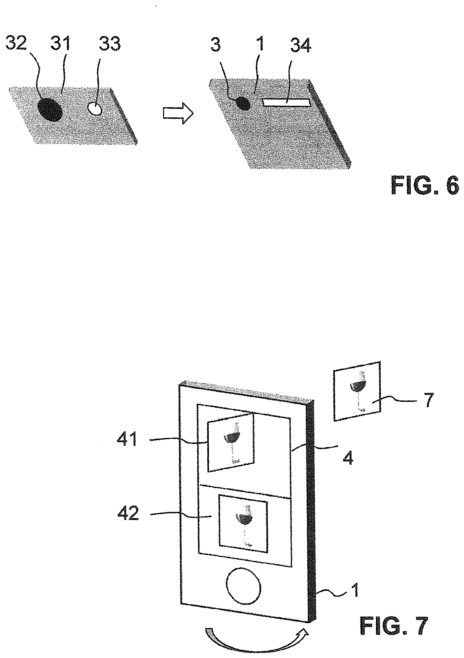

In der Fig. 6 ist ein portables Gerät 1 mit einem separaten Zusatzmodul 31 illustriert. Das Zusatzmodul weist eine Linsenanordnung 32 auf, um den Abbildungsmassstab der im portablen Gerät eingebauten Kamera 3 zu vergrössern und so feinere Details einer diffraktiven Struktur auflösen zu können. Das Zusatzmodul weist ausserdem eine spezielle Lichtquelle 33, z.B. einen (Dioden-) Laser oder eine spezielle LED auf, um das diffraktive Element gezielt zu beleuchten. Diese Lichtquelle ersetzt den eingebauten Blitz 34 des portablen Geräts. Das Zusatzmodul kann auf das portable Gerät aufgesteckt werden. Hierzu weist es nicht zeichnerisch dargestellte Führungen auf, wie sie dem Fachmann vertraut sind. Das Zusatzmodul kann drahtlos mit dem portablen Gerät verbindbar sein, z.B. über eine NFC-Schnittstelle oder Bluetooth. In diesem Fall weist es eine eigene Energiequelle, z.B. eine wiederaufladbare Batterie, auf. Das Zusatzmodul kann aber auch durch eine nicht zeichnerisch dargestellte Steckverbindung mit dem portablen Gerät verbindbar sein.

In der Fig. 7 ist eine mögliche Variante der Benutzerführung schematisch illustriert. Das Display 4 des portablen Geräts 1 ist hier in zwei Bereiche 41, 42 aufgeteilt. Im oberen Bereich 41 wird das von der Kamera aufgenommene Bild des diffraktiven Elements 7 dargestellt. Im unteren Bereich 42 wird ein vorgegebenes erstes Referenzbild dargestellt. Der Benutzer wird nun so geführt, dass er das portable Gerät so ausrichtet, dass das von der Kamera aufgenommene Bild möglichst genau dem ersten Referenzbild entspricht. Das so aufgenommene Bild fliesst in die Auswertung ein. Als nächstes wird im unteren Bereich 42 eine andere Ansicht des diffraktiven Elements aus einer anderen Raumrichtung dargestellt. Der Benutzer wird nun wiederum so geführt, dass er das portable Gerät entsprechend ausrichtet, dass das von der Kamera aufgenommene Bild im oberen Bereich 41 möglichst genau dem zweiten Referenzbild entspricht. Dieser Vorgang wird gegebenenfalls noch weiter wiederholt. Mit den so aufgenommenen Bildern und zugehörigen, ermittelten räumlichen Orientierungen des portablen Geräts wird dann ein Vergleich mit Referenzdaten durchgeführt.

Um das portable Gerät zu "trainieren", kann der Benutzer so geführt werden, dass er mit dem portablen Gerät Aufnahmen eines vorgegebenen diffraktiven Elements bei unterschiedlichen Umgebungsbedingungen macht (z.B. Sonnenschein, Regen, Innenraum usw.). Auf diese Weise kann die Robustheit des Verfahrens verbessert werden.

### BEZUGSZEICHENLISTE

- 1: Portables Gerät
- 2: diffraktives Element
- 3: Kamera
- 4: Display
- 5: Bewegung um eine erste Raumachse
- 6: Bewegung um eine zweite Raumachse
- 7: diffraktives Element
- 9: erstes Bild des diffraktives Element
- 10: zweites Bild des diffraktiven Elements
- 11: Ausführung der ersten Bildaufnahme
- 12: Ausführung der zweiten Bildaufnahme
- 13: Reduktion der ersten Bildaufnahme zu einer ersten Bildinformation
- 14: Reduktion der zweiten Bildaufnahme zu einer zweiten Bildinformation
- 15: Erstellen eines ersten Datensatzes
- 16: Erstellen eines zweiten Datensatzes
- 17: Vergleich der Datensätze im portablen Gerät
- 18: Senden des ersten und zweiten Datensatzes
- 19: Übermitteln der Datensätze in einem Netzwerk
- 20: Empfangen der Datensätze an einem externen Server
- 21: Vergleich der Datensätze mit Daten aus einer Datenbank
- 22: Verwertung der Datensätze
- 31: Zusatzmodul
- 32: Linsenanordnung
- 33: Lichtquelle
- 34: integrierter Blitz
- 41: erster Bereich
- 42: zweiter Bereich
- 51: Prozessor
- 52: Bildaufnahmeeinrichtung
- 53: Autofokuseinrichtung
- 54: Beleuchtungseinrichtung
- 55: Touchscreen-Display
- 56: Speicher
- 57: Kommunikationsmodul
- 58: Inertialsensoreinheit
- 59: Gyroskopeinheit
- 60: Geolokalisierungsmodul
- 61: Lautsprecher
- 70: Netzwerk
- 71: Auswerteeinheit
- 72: Datenbank
- α₁: erste Orientierung
- α₂: zweite Orientierung

## Patentansprüche

1. Verfahren zur Authentifizierung eines diffraktiven Elements (7), aufweisend:
Aufnehmen von mindestens zwei Bildern des diffraktiven Elements (7) mit einem portablen Gerät (1), welches eine Bildaufnahmevorrichtung (3) aufweist, wobei das Aufnehmen der Bilder mit unterschiedlichen räumlichen Orientierungen des portablen Gerätes (1) relativ zum diffraktiven Element (7) erfolgt,
**dadurch gekennzeichnet, dass** das Verfahren aufweist:
Ermitteln der räumlichen Orientierungen des portablen Gerätes (1) relativ zum diffraktiven Element (7) beim Aufnehmen der Bilder bezüglich mindestens zwei Raumrichtungen, wobei die räumlichen Orientierungen des portablen Gerätes (1) relativ zum diffraktiven Element (7) durch im portablen Gerät (1) integrierte Orientierungssensoren (58, 59) in Bezug auf eine bekannte Referenzorientierung relativ zum diffraktiven Element (7) und/oder durch Analyse der aufgenommenen Bilder ermittelt werden;
Erstellen von Aufnahmedaten aus den Bildern und den zugehörigen räumlichen Orientierungen; und
elektronischer Vergleich der Aufnahmedaten mit Referenzdaten.

2. Verfahren nach Anspruch wobei es sich bei den im portablen Gerät (1) integrierten Orientierungssensoren (58, 59) um Sensoren in Form von einem oder mehreren Inertialsensoren, einem oder mehreren Gyroskopen und/oder einem oder mehreren Magnetometern handelt.

3. Verfahren nach Anspruch 2, wobei aus Beschleunigungsdaten dieser Orientierungssensoren ein Qualitätsmass für die Authentifizierung ermittelt wird.

4. Verfahren nach Anspruch 3, wobei eine Fehlermeldung ausgegeben wird, wenn das Qualitätsmass ausserhalb eines vorgegebenen Wertebereichs liegt.

5. Verfahren nach einem der vorhergehenden Ansprüche, welches ausserdem aufweist:
Ausgeben von Anweisungen an den Benutzer über eine visuelle oder akustische Schnittstelle (4; 55, 61) in Abhängigkeit von den ermittelten räumlichen Orientierungen.

6. Verfahren nach einem der vorhergehenden Ansprüche, wobei die Referenzdaten im portablen Gerät (1) gespeichert werden und der elektronische Vergleich der Aufnahmedaten mit den Referenzdaten zumindest teilweise im portablen Gerät (1) erfolgt.

7. Verfahren nach einem der vorhergehenden Ansprüche, welches aufweist:
Übermitteln der Aufnahmedaten an eine räumlich vom portablen Gerät entfernte Auswerteeinheit (71),
wobei der elektronische Vergleich der Aufnahmedaten mit den Referenzdaten zumindest teilweise in der Auswerteeinheit (71) erfolgt.

8. Verfahren nach einem der vorhergehenden Ansprüche, wobei ein Authentifizierungsergebnis an eine elektronische Datenbank (72) übertragen wird und in der elektronischen Datenbank (72) abgelegt wird, optional zusammen mit den Aufnahmedaten.

9. Verfahren nach einem der vorhergehenden Ansprüche, wobei die Bildaufnahmevorrichtung (3) eine elektrisch ansteuerbare Fokussiereinrichtung (53) aufweist, und wobei die Bildaufnahmevorrichtung (3) so betrieben wird, dass sie Bilder in verschiedenen Fokusebenen relativ zum diffraktiven Element (7) aufnimmt.

10. Verfahren nach einem der vorhergehenden Ansprüche, wobei das portable Gerät ein Geolokalisierungsmodul (60) zur Ermittlung einer Ortsinformation aufweist, und wobei ein Authentifizierungsergebnis mit einer Ortsinformation assoziiert wird.

11. Verfahren nach einem der vorhergehenden Ansprüche,
wobei mindestens eines der Bilder im Umgebungslicht und ein weiteres der Bilder unter Beleuchtung mit einer im portablen Gerät (1) integrierten oder mit dem portablen Gerät verbundenen Lichtquelle aufgenommen wird, oder
wobei mindestens zwei der Bilder bei unterschiedlichen Beleuchtungsstärken einer im portablen Gerät (1) integrierten oder mit dem portablen Gerät verbundenen Lichtquelle aufgenommen werden.

12. Computerprogramm, welches bei der Ausführung in einem portablen Gerät (1) ein Verfahren nach einem der Ansprüche 1-11 ausführt.

13. Portables Gerät (1) zur Authentifizierung eines diffraktiven Elements nach einem der Ansprüche 1-11, aufweisend:
die Bildaufnahmevorrichtung (3) zur Aufnahme von Bildern des diffraktiven Elements;
die Orientierungssensoren zur Ermittlung einer Orientierung des portablen Geräts (1) bezüglich mindestens zwei Raumrichtungen;
eine Speichereinrichtung (56), in der ein Computerprogramm nach Anspruch 12 gespeichert ist; und
mindestens einen Prozessor (51) zur Ausführung des Computerprogramms.

14. Set aus einem portablen Gerät (1) nach Anspruch 13 und einem separaten Zusatzmodul (31), wobei das Zusatzmodul (31) mit dem portablen Gerät (1) verbindbar ist und mindestens eines der folgenden Elemente aufweist:
- eine Linsenanordnung (32) aus mindestens einer Linse zur Erhöhung des Abbildungsmassstabs der Bildaufnahmevorrichtung (3);
- eine Lichtquelle (33) zur Beleuchtung des diffraktiven Elements.

15. Set nach Anspruch 14, wobei es sich bei der Lichtquelle (33) um einen Laser handelt.

## Claims

1. A method for authenticating a diffractive element (7), comprising:
recording of at least two images of the diffractive element (7) using a portable device (1) having an image recording apparatus (3), wherein the images are recorded with different spatial orientations of the portable device (1) relative to the diffractive element (7), **characterized in that** the method comprises:
determining the spatial orientations of the portable device (1) relative to the diffractive element (7) during the recording of the images with respect to at least two spatial directions, wherein the spatial orientations of the portable device (1) relative to the diffractive element (7) are determined by way of orientation sensors (58, 59) that are integrated in the portable device (1) in relation to a known reference orientation relative to the diffractive element (7) and/or by way of analysis of the recorded images;
generating recording data from the images and the associated spatial orientations; and
electronically comparing the recording data with reference data.

2. The method as claimed in claim 1, wherein the orientation sensors (58, 59) that are integrated in the portable device (1) are sensors in the form of one or more inertial sensors, one or more gyroscopes and/or one or more magnetometers.

3. Method as claimed in claim 2, wherein a measure of quality for the authentication is determined from acceleration data of said orientation sensors.

4. The method as claimed in claim 3, wherein an error message is output if the measure of quality is outside a prespecified value range.

5. The method as claimed in any one of the preceding claims, which additionally comprises:
outputting instructions to the user via a visual or acoustic interface (4; 55, 61) in dependence on the determined spatial orientations.

6. The method as claimed in any one of the preceding claims, wherein the reference data are stored in the portable device (1) and the electronic comparison of the recording data with the reference data is carried out at least partially in the portable device (1).

7. The method as claimed in any one of the preceding claims, which comprises:
transmitting the recording data to an evaluation unit (71) that is spatially remote from the portable device,
wherein the electronic comparison of the recording data with the reference data at least partially takes place in the evaluation unit (71).

8. The method as claimed in any one of the preceding claims, wherein an authentication result is transmitted to an electronic database (72) and stored in the electronic database (72), optionally together with the recording data.

9. The method as claimed in any one of the preceding claims, wherein the image recording apparatus (3) comprises an electrically controllable focusing device (53), and wherein the image recording apparatus (3) is operated such that it records images in different focal planes relative to the diffractive element (7).

10. The method as claimed in any one of the preceding claims, wherein the portable device comprises a geo-localization module (60) for determining a location information, and wherein an authentication result is associated with a location information.

11. The method as claimed in any one of the preceding claims, wherein at least one of the images is recorded under ambient light and a further one of the images is recorded under illumination with a light source that is integrated in the portable device (1) or is connected to the portable device, or wherein at least two of the images are recorded at different illumination intensities of a light source that is integrated in the portable device (1) or connected to the portable device.

12. A computer program, which carries out a method as claimed in any one of claims 1-11 during the performance in a portable device (1).

13. A portable device (1) for authenticating a diffractive element as claimed in one of claims 1-11, comprising:
the image recording apparatus (3) for recording images of the diffractive element;
the orientation sensors for determining an orientation of the portable device (1) with respect to at least two spatial directions;
a memory device (56), in which a computer program according to claim 12 is stored; and
at least one processor (51) for carrying out the computer program.

14. A set composed of a portable device (1) as claimed in claim 13 and a separate additional module (31), wherein the additional module (31) is connectable to the portable device (1) and comprises at least one of the following elements:
- a lens arrangement (32) made up of at least one lens for increasing the magnification of the image recording apparatus (3);
- a light source (33) for illuminating the diffractive element.

15. The set as claimed in claim 14, wherein the light source (33) is a laser.

## Revendications

1. Un procédé pour l'authentification d'un élément diffractif (7), présentant:
enregistrer au moins deux images de l'élément diffractif (7) avec un appareil portable (1), lequel présente un dispositif d'enregistrement d'images (3), où l'enregistrement des images est réalisé à des orientations spatiales différentes de l'appareil portable (1) par rapport à l'élément diffractif (7), **caractérisé en ce que** le procédé présente:
déterminer les orientations spatiales de l'appareil portable (1) par rapport à l'élément diffractif (7) lors de l'enregistrement des images par rapport à au moins deux directions spatiales, où les orientations spatiales de l'appareil portable (1) par rapport à l'élément diffractif (7) lors de l'enregistrement des images sont déterminées par des capteurs d'orientation (58, 59) intégrés dans l'appareil portable (1) par rapport à une orientation de référence connue par rapport à l'élément diffractif (7) et/ou par analyse des images enregistrées;
générer de données d'enregistrement à partir des images et des orientations spatiales y correspondant, et
comparer de manière électronique des données d'enregistrement avec les données de référence.

2. Procédé selon la revendication 1, où les capteurs d'orientation (58, 59) intégrés dans l'appareil portable (1) sont des capteurs en forme d'un ou plusieurs capteur inertiels, un ou plusieurs gyroscopes et/ou un ou plusieurs magnétomètres.

3. Procédé selon la revendication 2, où une mesure de qualité pour l'authentification est déterminée à partir des données d'accélération de ces capteurs d'orientation.

4. Procédé selon la revendication 3, dans lequel un message d'erreur est émis si la mesure de qualité se situe en dehors d'une plage de valeurs prédéterminée.

5. Procédé selon l'une des revendications précédentes, qui comprend en outre
émettre des instructions à l'utilisateur via une interface visuelle ou acoustique (4; 55, 61), en fonction des orientations spatiales déterminées.

6. Procédé selon l'une des revendications précédentes, où les données de référence sont stockées dans l'appareil portable (1) et la comparaison de manière électronique des données d'enregistrement avec les données de référence a lieu au moins partiellement dans l'appareil portable (1). 6. P

7. Procédé selon l'une des revendications précédentes, lequel comprend:
transmettre des données d'enregistrement à une unité d'évaluation (71) éloignée spatialement du l'appareil portable,
où la comparaison de manière électronique des données d'enregistrement avec les données de référence a lieu dans l'unité d'évaluation (71).

8. Procédé selon l'une des revendications précédentes, où le résultat d'authentification est transmis et stocké dans une base de données électronique (72), optionnellement avec les données d'enregistrement.

9. Procédé selon l'une des revendications précédentes, dans lequel
le dispositif d'enregistrement d'images (3) présente un dispositif de focalisation électriquement contrôlable (53), et dans lequel le dispositif d'enregistrement d'images (3) est opéré de manière à enregistrer des images dans différents plans focaux par rapport à l'élément diffractif (7).

10. Procédé selon l'une des revendications précédentes, dans lequel l'appareil portable présente un module de géolocalisation (60) pour déterminer des informations de localisation, et dans lequel un résultat d'authentification est associé à des informations de localisation.

11. Procédé selon l'une des revendications précédentes,
dans lequel au moins une des images est enregistrée en lumière ambiante et une autre image en éclairage au moyen d'une source de lumière intégrée dans l'appareil portable (1) ou connectée à l'appareil portable, ou
dans lequel au moins deux des images sont enregistrées à différentes intensités d'éclairage d'une source de lumière intégrée dans l'appareil portable (1) ou connecté à l'appareil portable.

12. Programme d'ordinateur, lequel lors de l'exécution sur un appareil portable (1) exécute un procédé selon l'une des revendications 1 à 11.

13. Appareil portable (1) pour authentifier un élément diffractif selon l'une des revendications 1 à 11, présentant:
le dispositif d'enregistrement d'images (3) pour l'enregistrement d'images de l'élément diffractif;
les capteurs d'orientation pour la détermination l'orientation de l'appareil portable (1) par rapport à au moins deux directions spatiales;
un dispositif de mémoire (56), dans lequel un programme d'ordinateur selon la revendication 12 est stocké, et un processeur (51) pour exécuter le programme d'ordinateur.

14. Ensemble comprenant un appareil portable (1) selon la revendication 13 et un module supplémentaire (31), dans lequel le module supplémentaire (31) peut être connecté à l'appareil portable (1) et présente au moins un parmi les éléments suivants:
- un agencement de lentille (32) comprenant au moins une lentille pour l'augmentation de l'échelle d'imagerie du dispositif d'enregistrement d'image (3);
- une source lumineuse (33) pour éclairer l'élément diffractif.

15. Ensemble selon la revendication 14, dans lequel la source de lumière (33) est un laser.
